# EUROPÄISCHE PATENTANMELDUNG

(11) **EP 3 514 506 A1**
(43) Veröffentlichungstag der Anmeldung: **24.07.2019**
(21) Anmeldenummer: 19151091.6
(22) Anmeldetag: 10.01.2019
(51) Int. Cl.: G01F 1/66, G01F 15/02

(54) **VERFAHREN ZUM BETRIEB EINES FLUIDZÄHLERS**

(30) Priorität: 19.01.2018 DE 102018000414
(71) Anmelder: Diehl Metering GmbH, 91522 Ansbach (DE)
(72) Erfinder: Gaugler, Ulrich, 91746 Weidenbach (DE); Neder, Frederik, 91452 Wilhermsdorf (DE)
(74) Vertreter: Diehl Patentabteilung

(57) **Zusammenfassung**

Verfahren zum Betrieb eines Fluidzählers (1), insbesondere zur Durchflussmengenbestimmung eines strömenden Mediums, bei dem die Durchflussmengenbestimmung anhand einer Messanordnung erfolgt, und eine Sensoranordnung zur Lage- und/oder Neigungsbestimmung vorgesehen ist, wobei mittels der Sensoranordnung eine Achs- und/oder Winkellage des Fluidzählers (1) in Bezug auf wenigstens eine festlegbare Achse und/oder Richtung ermittelt wird, und die Achs- und/oder Winkellage zur Korrektur der Messwerte der Messanordnung herangezogen wird, wobei im Fluidzähler (1) eine Konvektionsströmung (11) des Mediums ermittelt wird und aus der ermittelten Konvektionsströmung (11) ein Korrektiv für die Messwerte der Messanordnung abgeleitet wird.

## Beschreibung

Die vorliegende Erfindung betrifft ein Verfahren zum Betrieb eines Fluidzählers zur Durchflussmengenbestimmung eines Mediums gemäß dem Oberbegriff des Anspruchs 1 sowie einen Fluidzähler, der insbesondere mittels des erfindungsgemäßen Verfahrens betrieben wird.

### Technologischer Hintergrund

Gattungsgemäße Fluidzähler werden üblicherweise dazu verwendet, Durchflussmengen von einem Fluid bzw. Medium in einem Fluidleitungsnetz zu ermitteln. Derartige Fluidzähler besitzen üblicherweise ein Anschlussgehäuse mit einem Einlass und einem Auslass, mittels dem der Fluidzähler in das Fluidleitungsnetz installiert werden kann. Die Strömungsrichtung des Fluids innerhalb des Fluidzählers kann vom Einlass zum Auslass verlaufen oder kann je nach Konstruktion des Fluidzählers auch umgekehrt gerichtet sein.

Größtenteils werden derartige Fluidzähler als Wasserzähler zur Ermittlung des Trinkwasserverbrauchs in Gebäuden sowie Industrie- und Gewerbeeinheiten oder als Wärmemengenzähler zur Ermittlung der verbrauchten Wärmeenergie eingesetzt. Vermehrt werden hierbei neben mechanischen Fluidzählern auch Ultraschallfluidzähler eingesetzt. Die Funktionsweise eines Ultraschallfluidzählers basiert auf dem Einsatz von Ultraschallwandlern, die im Bereich des Anschlussgehäuses des Ultraschallfluidzählers angeordnet sind. Die Ultraschallsignale der Ultraschallwandler, sogenannte Ultraschallbursts, werden dabei entlang der Ultraschallmessstrecke gesendet und empfangen.

Die Durchfluss- und/oder Volumenbestimmung eines durchströmenden Mediums mittels einer Ultraschallwandleranordnung kann z. B. anhand einer Laufzeitdifferenzmessung der Ultraschallsignale erfolgen (Laufzeitdifferenzmethode). Die Laufzeitdifferenz wird z. B. dadurch bestimmt, dass ein Ultraschallsignal zwischen zwei Ultraschallwandlern entlang der Ultraschallmessstrecke in und entgegen der Strömungsrichtung des Mediums gesendet wird.
Die Übertragung des Ultraschallsignals von einem Ultraschallwandler zum anderen Ultraschallwandler entlang der Ultraschallmessstrecke erfolgt hierbei in Strömungsrichtung des Mediums schneller als entgegengesetzt der Strömungsrichtung des Mediums. Aus dieser zeitlichen Differenz der Laufzeiten der Ultraschallsignale wird ein Laufzeitunterschied bzw. eine Laufzeitdifferenz ermittelt. Anhand des Laufzeitunterschieds und der im Vorfeld bekannten Dimension des Ultraschallfluidzählers können anschließend der Durchfluss und/oder das Volumen des durchströmenden Mediums bestimmt werden. Jedoch treten naturgemäß gerade im geringen Durchflussbereich und während des Stillstands Messfehler auf, da das Innere des Ultraschallfluidzählers bei der Laufzeitdifferenzmessung stärker als der Rand gewichtet wird und die Strömung im Inneren in der Regel eine andere Stärke bzw. Richtung aufweist.

### Nächstliegender Stand der Technik

Aus der DE 10 2008 063 261 A1 ist ein Fluidzähler bzw. ein Volumenzähler für Flüssigkeiten bekannt, der eine Volumenmesseinrichtung zur Volumenbestimmung des Mediums sowie eine Sensoranordnung mit wenigstens einem Neigungssensor aufweist. Die Sensoranordnung dient hierbei dazu, die Achs- und/oder Winkellage des Volumenzählers in Relation zur Einbaulage zu bestimmen. Ferner besitzt der Volumenzähler ein Rechenwerk, welches durch die Verarbeitung der Lageinformation der Sensoranordnung eine Optimierung der Messeigenschaften und somit eine Verbesserung der Messergebnisse bewirkt.

Die DE 199 61 036 A1 beschreibt einen Wasserzähler sowie ein Verfahren zum Betreiben eines Wasserzählers, bei welchem die Einbaulage des Wasserzählers detektiert wird und anschließend die Messergebnisse des Wasserzählers in Abhängigkeit von der Einbaulage korrigiert werden. Der Wasserzähler verfügt dabei über Mittel zur Detektion der Einbaulage, wie z. B. optische, induktive oder kapazitative Sensoren. Dadurch können lageabhängige Messfehler beseitigt werden. Jedoch können Messungenauigkeiten, die z. B. aufgrund von Konvektionsströmungen im Medium auftreten, nicht ermittelt und vermindert werden.

### Aufgabe der vorliegenden Erfindung

Die Aufgabe der vorliegenden Erfindung besteht darin, ein gattungsgemäßes Verfahren zum Betrieb eines Fluidzählers zur Verfügung zu stellen, welches eine im Vergleich zum Stand der Technik verbesserte Messgenauigkeit aufweist.

### Lösung der Aufgabe

Die vorstehende Aufgabe wird durch die gesamte Lehre des Anspruchs 1 sowie des nebengeordneten Anspruchs gelöst. Zweckmäßige Ausgestaltungen der Erfindung sind in den Unteransprüchen beansprucht.

Bei dem Verfahren zum Betrieb eines Fluidzählers zur Durchflussmengenbestimmung eines vorzugsweise strömenden Mediums, wird die Durchflussmengenbestimmung anhand einer Messanordnung durchgeführt. Zudem dient eine Sensoranordnung zur Lage- und/oder Neigungsbestimmung, mittels der eine Achs- und/oder Winkellage des Fluidzählers in Bezug auf wenigstens eine festlegbare Achse und/oder Richtung ermittelt wird. Die Achs- und/oder Winkellage wird dabei insbesondere zur Korrektur der die Durchflussmengenbestimmung betreffenden Messwerte der Messanordnung herangezogen.

Erfindungsgemäß wird im Fluidzähler eine Konvektionsströmung des Mediums ermittelt, wobei aus der ermittelten Konvektionsströmung ein Korrektiv für die Messwerte der Messanordnung abgeleitet wird. Beispielsweise kann die Größe (bzw. die Höhe oder Stärke) sowie die Richtung der Konvektionsströmung ermittelt werden. Dadurch kann der Einfluss der Konvektionsströmung auf die Messwerte der Messanordnung verringert oder beseitigt werden. Beispielsweise indem die Messwerte entsprechend korrigiert werden (z. B. rechnerisch durch einen Korrekturterm bzw. das Korrektiv korrigiert werden), sodass die Messgenauigkeit des Fluidzählers in besonderem Maße verbessert wird. Insbesondere kann dadurch bei einem Wasserzähler oder Großwasserzähler eine Verbesserung im unteren Messbereich bei kleinen Durchflüssen erzielt werden. Zudem wird dadurch die Messdynamik gesteigert.
Vorzugsweise wird die Temperatur des Mediums und/oder des Anschlussgehäuses zur Detektion der Konvektionsströmung bzw. der Größe der Konvektionsströmung herangezogen. Beispielsweise dadurch, dass die Konvektion innerhalb des Fluidzählers umso höher ist, je größer der Unterschied zwischen der Temperatur des Anschlussgehäuses und der Temperatur des Mediums ist. Zur Bestimmung der Temperatur des Mediums können somit korrelierende Temperatur- und Konvektionsströmungswerte z. B. anhand einer Korrelationsmatrix ausgelesen werden.

Zweckmäßigerweise kann die Temperatur des Mediums im oder außerhalb des Fluidzählers bestimmt werden. In praktischer Weise kann somit die Temperatur des Mediums innerhalb des Fluidzählers (z. B. über einen Temperatursensor, einen Temperaturfühler, eine Ultraschallmessung oder dergleichen) oder außerhalb des Fluidzählers (z. B. über einen externen Sensor) bestimmt werden. Die außerhalb des Fluidzählers ermittelte Temperatur des Mediums kann anschließend an den Fluidzähler bzw. an eine Steuer- und Auswerteeinrichtung des Fluidzählers übermittelt werden, z. B. mittels Datenkabel- oder Funkübertragung.

In gleicher Weise kann auch die Temperatur des Anschlussgehäuses z. B. mittels eines Temperatursensors oder dergleichen bestimmt werden. Beispielsweise kann durch den Abgleich der Temperaturen ein Temperaturunterschied zwischen der Temperatur des Anschlussgehäuses und der Temperatur des Mediums bestimmt werden, der als Maß für Höhe der Konvektionsströmung herangezogen werden kann. Über die Lageerkennung bzw. Lagebestimmung des Fluidzählers mittels der Sensoranordnung in Kombination mit der Temperatur- und Konvektionsbestimmung wird somit eine Verbesserung der Messgenauigkeit erzielt, indem der Einfluss der Konvektion bzw. von Einbauorientierung und Konvektion auf die Messgenauigkeit vorzugsweise rechnerisch verringert oder gar unterdrückt wird.

In vorteilhafter Weise kann als festlegbare Achse die Orientierung bzw. Einbaulage des Fluidzählers und/oder die Durchströmungsrichtung des Mediums vorgesehen sein. Dadurch kann die tatsächliche Einbaulage (horizontal oder vertikal) des Fluidzählers ermittelt werden. Die tatsächliche Einbaulage kann zudem beispielsweise durch uneinheitlich verbaute Rohrleitungssysteme oder bautechnische Abweichungen des Anschlussgehäuses von der idealen Einbaulage (exakt horizontal oder vertikal) abweichen. Bereits minimale Abweichungen können hierbei zu Messfehlern führen, die durch die Ermittlung der Abweichung und die anschließende Korrektur dieser Abweichung vermieden werden können. Die Messgenauigkeit wird dadurch noch zusätzlich verbessert.

Zweckmäßigerweise kann als Messanordnung eine Ultraschallmessanordnung vorgesehen sein, welche eine Ultraschallmessstrecke und mindestens einen, vorzugsweise zwei oder mehr, Ultraschallwandler umfasst. Die Ultraschallmessstrecke kann dabei gerade oder schräg verlaufen oder z. B. durch Reflektoren bzw. Spiegel umgelenkt sein, sodass diese beispielsweise U-förmig verläuft.

Vorzugsweise umfasst die Messanordnung zur Durchflussmengenbestimmung eine Ultraschallmessstrecke und mindestens einen Ultraschallwandler zum Senden und/oder Empfangen eines Ultraschallsignals. Das Ultraschallsignal wird dabei entlang der Ultraschallmessstrecke gesendet.

Ferner erfolgt die Durchflussmengenbestimmung bevorzugt anhand einer Laufzeitdifferenz der Laufzeit des Ultraschallsignals in und entgegen der Durchströmungsrichtung des Mediums. Die Laufzeiten der Ultraschallsignale werden dabei kontinuierlich bestimmt. Die Laufzeitdifferenz des Ultraschallsignals ist dabei zumindest im Wesentlichen proportional zur mittleren Fließgeschwindigkeit. Aus dem Produkt der mittleren Fließgeschwindigkeit und dem Durchflussquerschnitt kann anschließend das Durchflussvolumen pro Zeiteinheit bestimmt werden. Durch eine derartige Durchflussmengenbestimmung kann eine hohe Messgenauigkeit über einen großen Messbereich ermöglicht werden. Zudem ist die Ultraschallmessmethode unempfindlich gegen Druck- und Durchflussschwankungen, Vibrationen und Blasenanteile (z. B. durch Lufteinschlüsse).

Gemäß einer bevorzugten Ausgestaltung dient die Messanordnung zur Durchflussmengenbestimmung auch zur Temperaturbestimmung des Mediums. Dadurch kann ein zusätzlicher Sensor zur Temperaturbestimmung des Mediums eingespart werden. Infolgedessen wird der Kosten- und Wartungsaufwand in besonderem Maße verringert.

In vorteilhafter Weise kann die Temperaturbestimmung des Mediums dabei anhand einer Laufzeitbestimmung des Ultraschallsignals erfolgen, z. B. anhand einer Laufzeitdifferenzmessung. Die Temperaturbestimmung kann z. B. erfolgen, indem eine Kalibrationsgerade bzw. eine Kalibrationstabelle für Laufzeiten des Ultraschallsignals bei bestimmten Temperaturbereichen sowie Durchflüssen für ein bestimmtes Medium (z. B. Wasser) erstellt wird. Diese Kalibrationsgerade kann z. B. in einem Speicher bzw. Datenspeicher der Steuer- und Auswerteeinrichtung des Fluidzählers hinterlegt werden, sodass durch Abgleichen der aktuellen Messwerte mit den Werten der Kalibrationstabelle die Temperatur des Mediums z. B. durch Auslesen aus der Kalibrationstabelle und/oder Berechnen anhand ausgelesener Werte in einfacher Weise ermittelbar ist.

Alternativ oder zusätzlich kann die Temperaturbestimmung des Mediums und/oder des Anschlussgehäuses anhand eines dafür vorgesehenen Temperatursensors bzw. Temperaturfühlers durchgeführt werden. Ferner kann auch ein zusätzlicher Ultraschallsensor zur Temperaturbestimmung vorgesehen sein. Besonders vorteilhaft ist es, die Temperaturbestimmung des Anschlussgehäuses anhand des Temperatursensors und die Temperaturbestimmung des Mediums anhand der Messanordnung zur Durchflussmengenbestimmung durchzuführen.

Vorzugsweise wird dabei die Temperaturdifferenz zwischen der Temperatur des Mediums und der Temperatur des Anschlussgehäuses bestimmt. Die Temperaturdifferenz wird dabei zur Bestimmung der Konvektion des Mediums herangezogen. Ferner kann durch die Höhe des Temperaturunterschieds auf die Größe der Konvektion geschlossen werden.

Dadurch, dass die Achs- und/oder Winkellage zur Bestimmung der Richtung der Konvektionsströmung herangezogen wird, kann die Bestimmung bzw. Festlegung der Korrekturgröße bzw. des Korrekturterms (Korrektiv) anhand der Richtung der Konvektionsströmung und der Temperaturdifferenz von Anschlussgehäuse und Medium für die Durchflussgeschwindigkeit bzw. das Durchflussvolumen abgeleitet werden. Die Messgenauigkeit wird dadurch in erheblichem Maße verbessert.

Zweckmäßigerweise kann eine Datentabelle vorgesehen sein, in welcher z. B. empirisch ermittelte Daten sowie Geräteparameter hinterlegt sind. Die Datentabelle kann beispielsweise als Look-up-Tabelle ausgestaltet sein, die in einem dem Fluidzähler zugeordneten Datenspeicher abgespeichert ist. Die Datentabelle kann dadurch in praktischer Weise automatisch aktualisiert bzw. rekalibriert werden oder durch eine Aktualisierungssitzung im Rahmen einer Wartung oder einer Funkübertragung erneuert und/oder ergänzt werden. In vorteilhafter Weise kann die Datentabelle auch die Kalibrationstabelle bzw. die Kalibrationsparameter zur Temperaturbestimmung umfassen.

Vorzugsweise sind als empirisch ermittelte Daten und Geräteparameter die Laufzeit des Ultraschallsignals und/oder die Laufzeitdifferenz des Ultraschallsignals in und entgegen der Durchströmungsrichtung des Mediums und/oder die Temperatur des Mediums und/oder die Temperatur des Anschlussgehäuses und/oder die Einbaulage des Fluidzählers und/oder die Dichte des Mediums und/oder die Durchflussgeschwindigkeit sowie das Durchflussvolumen und/oder die Richtung der Konvektionsströmung und/oder die Größe der Konvektionsströmung vorgesehen.

Nebengeordnet umfasst die vorliegende Erfindung einen Fluidzähler zur Durchflussmengenbestimmung eines vorzugsweise strömenden Mediums, der insbesondere mittels des erfindungsgemäßen Verfahrens betrieben wird. Der Fluidzähler umfasst zweckmäßigerweise ein Anschlussgehäuse sowie einen Zufluss und einen Abfluss zum Einbau des Fluidzählers in ein Fluidleitungssystem. Ferner umfasst der Fluidzähler eine Steuer- und Auswerteeinrichtung, die unter anderem zum Betrieb des Fluidzählers dient, eine Messanordnung zur Durchflussmengenbestimmung sowie eine Sensoranordnung zur Lage- und/oder Neigungsbestimmung des Fluidzählers. Die Sensoranordnung ist dazu hergerichtet, eine Achs- und/oder Winkellage des Fluidzählers in Bezug auf wenigstens eine vorbestimmbare bzw. festlegbare Achse und/oder Richtung zu ermitteln. Als festlegbare Achse können beispielsweise die Orientierung bzw. die Einbaulage des Fluidzählers und/oder die Durchströmungsrichtung des Mediums vorgesehen sein. Zweckmäßigerweise ist die Steuer- und Auswerteeinrichtung dazu hergerichtet, die Achs- und/oder Winkellage dabei zur Korrektur der Messwerte der Messanordnung heranzuziehen. Erfindungsgemäß ist dabei mindestens ein Mittel zur Bestimmung einer Konvektionsströmung des Mediums vorgesehen, wobei aus der ermittelten Konvektionsströmung ein Korrektiv für die Messwerte der Messanordnung ableitbar ist.

Vorzugsweise ist jeweils eine Vorrichtung zur Temperaturbestimmung des Mediums und/oder des Anschlussgehäuses als Mittel zur Bestimmung der Konvektionsströmung des Mediums vorgesehen. Durch den Temperaturunterschied zwischen der Temperatur des Anschlussgehäuses und der Temperatur des Mediums kann z. B. die Größe bzw. Höhe der Konvektionsströmung bestimmt werden.

Gemäß einer vorteilhaften Ausgestaltung des erfindungsgemäßen Fluidzählers kann auch die Messanordnung zur Durchflussmengenbestimmung als Vorrichtung zur Temperaturbestimmung des Mediums dienen, sodass neben der Durchflussmengenbestimmung auch die Temperatur des Mediums über die Messanordnung ermittelt wird. Die Ermittlung der Temperatur erfolgt dabei vorzugsweise anhand einer Laufzeitmessung in Verbindung mit den für die jeweiligen Laufzeiten empirisch ermittelten Temperaturwerten, die z. B. im Datenspeicher des Fluidzählers hinterlegt sind.

Zweckmäßigerweise kann mindestens ein und/oder jeweils ein Temperatursensor als Vorrichtung zur Temperaturbestimmung des Mediums und/oder des Anschlussgehäuses vorgesehen sein.

Alternativ oder zusätzlich kann die Sensoranordnung zur Lage- und/oder Neigungsbestimmung als Mittel zur Bestimmung der Konvektionsströmung des Mediums dienen. Durch die Bestimmung der Einbauorientierung (Lageerkennung) kann die Richtung der Konvektionsströmung in einfacher Weise ermittelt werden. Die Richtung der Konvektionsströmung kann anschließend zur Bestimmung bzw. Berechnung der Höhe des Korrekturterms bzw. des Korrektivs herangezogen werden.

Besonders vorteilhaft ist es, wenn die Sensoranordnung einen Lage- und/oder Neigungssensor umfasst. Dadurch kann die Orientierung, in welcher der Fluidzähler eingebaut ist, in einfacher Weise bestimmt und z. B. an die Steuer- und Auswerteeinrichtung übermittelt werden.

Ferner kann die Steuer- und Auswerteeinrichtung dazu hergerichtet sein, das Korrektiv für die Messwerte der Messanordnung aus der bestimmten Konvektionsströmung abzuleiten, d. h. die Temperatur des Mediums und/oder die Temperatur des Anschlussgehäuses zur Korrektur der Messwerte der Messanordnung heranzuziehen.

Vorzugsweise umfasst die Messanordnung zur Durchflussmengenbestimmung eine Ultraschallmessstrecke und mindestens einen Ultraschallwandler zum Senden und/oder Empfangen eines Ultraschallsignals. Das Ultraschallsignal wird dabei entlang der Ultraschallmessstrecke gesendet.

### Beschreibung der Erfindung anhand von Ausführunasbeispielen

Zweckmäßige Ausgestaltungen der vorliegenden Erfindung werden anhand von Zeichnungsfiguren nachstehend näher erläutert. Es zeigen:
- Fig. 1: eine vereinfachte, schematische Schnittdarstellung einer ersten Ausgestaltung des erfindungsgemäßen Fluidzählers, sowie
- Fig. 2: eine vereinfachte, schematische Darstellung einer weiteren Ausgestaltung des erfindungsgemäßen Fluidzählers, dargestellt in Durchströmungsrichtung des Mediums.

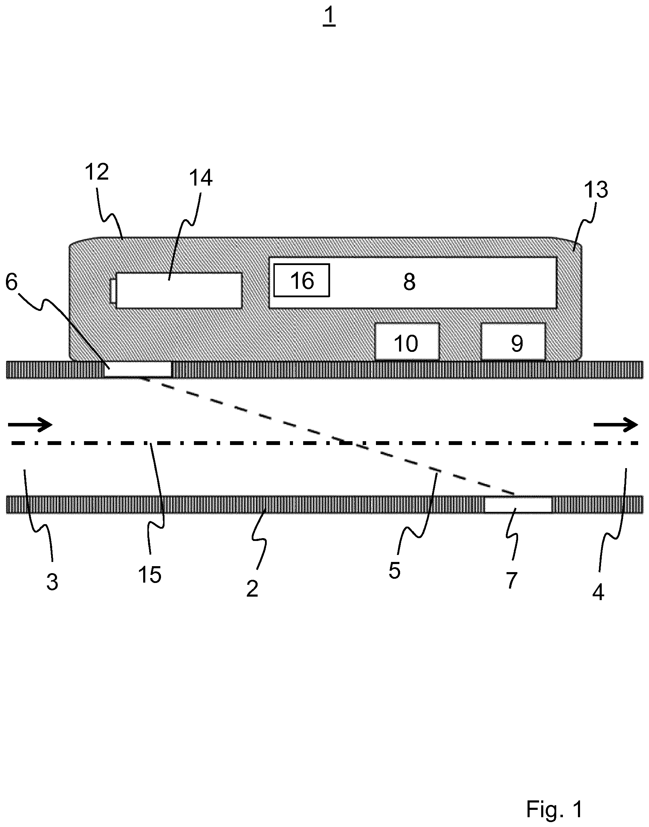

Bezugsziffer 1 in Fig. 1 bezeichnet einen erfindungsgemäßen Fluidzähler zur Durchflussmengenbestimmung eines vorzugsweise strömenden Mediums. Bei dem Fluidzähler 1 handelt es sich z. B. um einen Wasserzähler oder einen Großwasserzähler, der z. B. für Nenndurchflüsse ab 15 m³/h eingesetzt wird. Der Fluidzähler 1 umfasst ein Anschlussgehäuse 2, das über einen Zufluss 3 und einen Abfluss 4 in ein, in den Figuren nicht dargestelltes, Fluidleitungssystem installierbar ist. Die Durchströmungsrichtung des Mediums bzw. des Wassers ist in Fig. 1 mit schwarzen Pfeilen gekennzeichnet und verläuft vom Zufluss 3 zum Abfluss 4. Die Messanordnung zur Durchflussmengenbestimmung ist als Ultraschallmessanordnung ausgestaltet und umfasst zwei Ultraschallwandler 6, 7, insbesondere piezoelektrische Ultraschallwandler, sowie eine zwischen den Ultraschallwandlern 6, 7 befindliche Ultraschallmessstrecke 5.

Der Wasserverbrauch bzw. die Durchflussmenge an Wasser wird bei dem Fluidzähler 1 bestimmt, indem die Ultraschallwandler 6, 7 jeweils ein Ultraschallsignal entlang der Ultraschallmessstrecke 5 senden. Die Ultraschallsignale verlaufen hierbei in und entgegen der Durchströmungsrichtung des Wassers von dem einen Ultraschallwandler 6 zu dem anderen Ultraschallwandler 7 und umgekehrt. Anschließend kann z. B. anhand der Laufzeiten des Ultraschallsignals in und entgegen der Durchströmungsrichtung eine Laufzeitdifferenz ermittelt werden, die zur Durchflussmengenbestimmung herangezogen wird. Die Laufzeitbestimmung erfolgt vorzugsweise kontinuierlich.

Ferner umfasst der Fluidzähler 1 eine einen Lagesensor 9 umfassende Sensoranordnung zur Lage- und/oder Neigungsbestimmung und eine Steuer- und Auswerteeinrichtung 8, die unter anderem zum Steuern der Ultraschallwandler 6, 7 (Frequenzauswahl, Sendezeiten oder dergleichen) dient. Darüber hinaus dient die Steuer- und Auswerteeinrichtung 8 zum Auswerten und Verarbeiten der Verbrauchsdaten und/oder der Daten und Messwerte, die von den Mess- und/oder Sensoranordnungen bestimmt werden. Ferner kann ein Datenspeicher 16 vorgesehen sein, der z. B. dazu hergerichtet ist, die Betriebsdaten und/oder Verbrauchsdaten und/oder Geräteparameter und/oder die Eigenschaften des Mediums oder dergleichen zu speichern. Zudem kann eine, in den Figuren nicht dargestellte, Kommunikationseinrichtung vorgesehen sein, die dazu hergerichtet sein kann, die Daten und/oder Geräteparameter z. B. per Funk an eine übergeordnete Einheit, wie die Schaltzentrale des Versorgers oder einen anderen Datensammler zu übertragen. Darüber hinaus umfasst der Fluidzähler 1 eine Batterie 14 zur Energieversorgung. Die Steuer- und Auswerteeinrichtung 8, der Datenspeicher 16 sowie die Batterie 14 sind vorzugsweise in einem Elektronikgehäuse 12 untergebracht, welches mit Vergussmasse 13 vergossen ist, d. h. hermetisch geschlossen ist, um z. B. das Eindringen von Wasser und Staub zu verhindern.

Zweckmäßigerweise kann durch den Neige- und/oder Lagesensor 9 ermittelt werden, in welcher Orientierung bzw. in welcher Einbaulage 15 der Fluidzähler 1 eingebaut ist. Weiterhin wird mit einem Temperaturfühler bzw. Temperatursensor 10 die Temperatur des das Medium umschließenden Anschlussgehäuses 2 ermittelt. Schließlich wird auf der Basis der Schalllaufzeit des Ultraschallsignals die Temperatur im Medium ermittelt, z. B. über eine Datentabelle bzw. eine Look-up-Tabelle, in welcher die zur jeweiligen Schalllaufzeit dazugehörigen Temperaturen des Mediums hinterlegt sind. Je höher der Unterschied zwischen der Temperatur des Mediums und der Temperatur des Anschlussgehäuses 2 ist, umso höher bzw. größer ist die Konvektion, mit der im Medium zu rechnen ist.

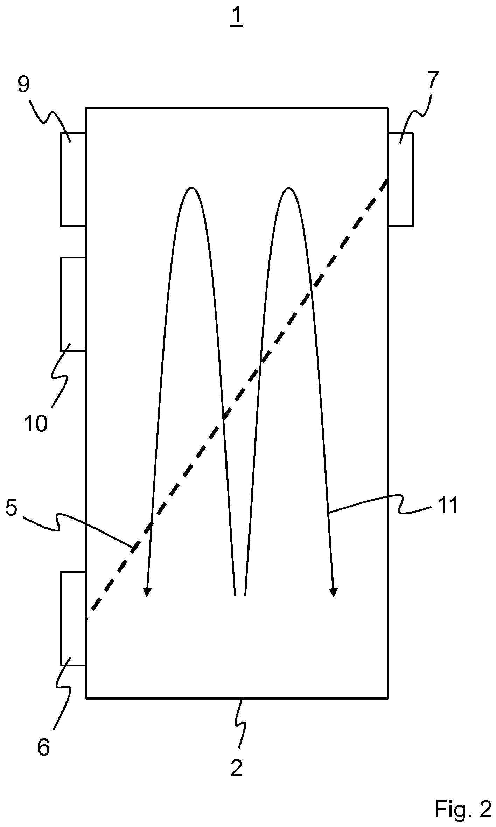

Bezugsziffer 11 in Fig. 2 bezeichnet die Konvektionsströmung im Medium, welche z. B. durch thermodynamische Ungleichgewichte im Zuge eines Temperaturunterschieds zwischen Medium und Anschlussgehäuse 2 entsteht und sich auf die Messgenauigkeit negativ auswirken kann. Die Konvektionsströmung verläuft in Fig. 2 ausgehend von der Mitte des Anschlussgehäuses 2 zu der Wandung des Anschlussgehäuses 2, wodurch sich zwei im Wesentlichen spiegelgleiche Konvektionszellen innerhalb des Anschlussgehäuses 2 bilden. Um die Richtung der Konvektionsströmung zu ermitteln, wird die Information des Lagesensors 9 ausgewertet. Anschließend wird z. B. mit empirisch ermittelten Laufzeitdifferenzen eine Korrektur der gemessenen Laufzeiten auf der Basis von der Temperatur des Mediums, der Temperatur des Anschlussgehäuses 2 und der Einbaulage 15 des Fluidzählers 1 durchgeführt. Die empirisch ermittelten Laufzeitdifferenzen können beispielsweise im Vorfeld bestimmt und z. B. in dem Datenspeicher 16 als Datentabelle bzw. Look-up-Tabelle hinterlegt werden. Durch die Korrektur der gemessenen Laufzeiten kann allgemeinhin eine Konvektionsunterdrückung hinsichtlich der Messergebnisse erfolgen, bei der auf der Basis eines Neige- und/oder Lagesensors sowie der Mediums- und Anschlussgehäusetemperatur ein Korrekturwert oder Korrekturterm (Korrektiv) für die Laufzeit und/oder die Laufzeitdifferenz ermittelt und angewandt wird.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen.

### BEZUGSZEICHENLISTE

- 1: Fluidzählers
- 2: Anschlussgehäuse
- 3: Zufluss
- 4: Abfluss
- 5: Ultraschallmessstrecke
- 6: Ultraschallwandler
- 7: Ultraschallwandler
- 8: Steuer- und Auswerteeinrichtung
- 9: Lagesensor
- 10: Temperatursensor
- 11: Konvektionsströmung
- 12: Elektronikgehäuse
- 13: Vergussmasse
- 14: Batterie
- 15: Einbaulage
- 16: Datenspeicher

## Patentansprüche

1. Verfahren zum Betrieb eines Fluidzählers (1), insbesondere zur Durchflussmengenbestimmung eines strömenden Mediums, bei dem
die Durchflussmengenbestimmung anhand einer Messanordnung erfolgt, und
eine Sensoranordnung zur Lage- und/oder Neigungsbestimmung vorgesehen ist, wobei
mittels der Sensoranordnung eine Achs- und/oder Winkellage des Fluidzählers (1) in Bezug auf wenigstens eine festlegbare Achse und/oder Richtung ermittelt wird, und
die Achs- und/oder Winkellage zur Korrektur der Messwerte der Messanordnung herangezogen wird,
**dadurch gekennzeichnet, dass**
im Fluidzähler (1) eine Konvektionsströmung (11) des Mediums ermittelt wird und aus der ermittelten Konvektionsströmung (11) ein Korrektiv für die Messwerte der Messanordnung abgeleitet wird.

2. Verfahren nach Anspruch 1, **dadurch gekennzeichnet, dass** die Temperatur des Mediums und/oder des Anschlussgehäuses (2) zur Detektion der Konvektionsströmung (11) herangezogen wird, wobei insbesondere vorgesehen ist, dass die Temperatur des Mediums im oder außerhalb des Fluidzählers (1) bestimmt wird und/oder dass die Temperatur des Anschlussgehäuses (2) bestimmt wird.

3. Verfahren nach einem der vorhergehenden Ansprüche, **dadurch gekennzeichnet, dass** als festlegbare Achse die Einbaulage und/oder die Durchströmungsrichtung des Mediums des Fluidzählers (1) vorgesehen sind.

4. Verfahren nach einem der vorhergehenden Ansprüche, **dadurch gekennzeichnet, dass** als Messanordnung eine Ultraschallmessanordnung mit einer Ultraschallmessstrecke (5) und mindestens einem Ultraschallwandler (6, 7) vorgesehen ist, wobei vorzugsweise vorgesehen ist, dass die Durchflussmengenbestimmung anhand einer Laufzeitdifferenz der Laufzeit des Ultraschallsignals, insbesondere in und entgegen der Durchströmungsrichtung des Mediums erfolgt.

5. Verfahren nach mindestens einem der vorhergehenden Ansprüche, **dadurch gekennzeichnet, dass** die Messanordnung zur Temperaturbestimmung des Mediums verwendet wird und/oder die Temperaturbestimmung des Mediums anhand einer Laufzeitmessung des Ultraschallsignals erfolgt.

6. Verfahren nach einem der vorhergehenden Ansprüche, **dadurch gekennzeichnet, dass** die Temperaturbestimmung des Mediums und/oder des Anschlussgehäuses (2) anhand eines Temperatursensors (10) durchgeführt wird.

7. Verfahren nach einem der vorhergehenden Ansprüche, **dadurch gekennzeichnet, dass** eine Temperaturdifferenz zwischen der Temperatur des Mediums und der Temperatur des Anschlussgehäuses (2) bestimmt wird und die Temperaturdifferenz zur Bestimmung der Konvektion im Medium herangezogen wird.

8. Verfahren nach einem der vorhergehenden Ansprüche, **dadurch gekennzeichnet, dass** die Achs- und/oder Winkellage zur Bestimmung der Richtung der Konvektionsströmung (11) herangezogen wird.

9. Verfahren nach einem der vorhergehenden Ansprüche, **dadurch gekennzeichnet, dass** eine Datentabelle vorgesehen ist, in welcher empirisch ermittelte Daten sowie Geräteparameter hinterlegt sind, wobei insbesondere vorgesehen ist,dass als empirisch ermittelte Daten sowie Geräteparameter die Laufzeit des Ultraschallsignals und/oder die Laufzeitdifferenz des Ultraschallsignals in und entgegen der Durchströmungsrichtung des Mediums und/oder die Temperatur des Mediums und/oder die Temperatur des Anschlussgehäuses (2) und/oder die Einbaulage des Fluidzählers (1) und/oder die Dichte des Mediums und/oder die Durchflussgeschwindigkeit sowie das Durchflussvolumen und/oder die Richtung der Konvektionsströmung (11) und/oder die Stärke der Konvektionsströmung (11) vorgesehen sind.

10. Fluidzähler (1) zur Durchflussmengenbestimmung eines insbesondere strömenden Mediums, welcher vorzugsweise mittels eines Verfahrens nach mindestens einem der vorhergehenden Ansprüche betrieben wird, umfassend
ein Anschlussgehäuse (2),
einen Zufluss (3),
einen Abfluss (4),
eine Steuer- und Auswerteeinrichtung (8),
eine Messanordnung zur Durchflussmengenbestimmung, sowie
eine Sensoranordnung zur Lage- und/oder Neigungsbestimmung des Fluidzählers (1), wobei
die Sensoranordnung dazu hergerichtet ist, eine Achs- und/oder Winkellage des Fluidzählers (1) in Bezug auf wenigstens eine festlegbare Achse und/oder Richtung zu ermitteln, und
die Steuer- und Auswerteeinrichtung (8) dazu hergerichtet ist, die Achs- und/oder Winkellage zur Korrektur der Messwerte der Messanordnung heranzuziehen,
**dadurch gekennzeichnet, dass**
mindestens ein Mittel zur Bestimmung einer Konvektionsströmung (11) des Mediums vorgesehen ist und aus der ermittelten Konvektionsströmung (11) ein Korrektiv für die Messwerte der Messanordnung ableitbar ist.

11. Fluidzähler (1) nach Anspruch 10, **dadurch gekennzeichnet, dass** eine Vorrichtung zur Temperaturbestimmung des Mediums und/oder des Anschlussgehäuses (2) als Mittel zur Bestimmung der Konvektionsströmung (11) des Mediums vorgesehen ist, wobei insbesondere vorgesehen ist, dass die Messanordnung als Vorrichtung zur Temperaturbestimmung des Mediums dient und/oder dass ein Temperatursensor (10) als Vorrichtung zur Temperaturbestimmung des Mediums und/oder des Anschlussgehäuses (2) vorgesehen ist.

12. Fluidzähler (1) nach Anspruch 10 oder 11, **dadurch gekennzeichnet, dass** die Sensoranordnung zur Lage- und/oder Neigungsbestimmung als Mittel zur Bestimmung der Konvektionsströmung (11) des Mediums vorgesehen ist.

13. Fluidzähler (1) nach einem der Ansprüche 10-12, **dadurch gekennzeichnet, dass** die Sensoranordnung einen Neigungs- und/oder Lagesensor (9) umfasst.

14. Fluidzähler (1) nach einem der Ansprüche 10-13, **dadurch gekennzeichnet, dass** die Steuer- und Auswerteeinrichtung (8) dazu hergerichtet ist, das Korrektiv für die Messwerte der Messanordnung aus der bestimmten Konvektionsströmung (11) abzuleiten.

15. Fluidzähler (1) nach mindestens einem der Ansprüche 10-14, **dadurch gekennzeichnet, dass** die Messanordnung eine Ultraschallmessstrecke (5) und mindestens einen Ultraschallwandler (6, 7) zum Senden und/oder Empfangen eines Ultraschallsignals umfasst und das Ultraschallsignal entlang der Ultraschallmessstrecke (5) gesendet wird.
